# FASCICULE DE BREVET EUROPEEN

(11) **EP 3 839 738 B1**
(45) Date de publication et mention de la délivrance du brevet: **25.02.2026**
(21) Numéro de dépôt: 20214337.6
(22) Date de dépôt: 15.12.2020
(51) Int. Cl.: G06F 9/50, H04L 45/12, H04L 45/42, H04L 47/78, H04L 67/63

(54) **PROCÉDÉ DE GESTION DES REQUÊTES D'ALLOCATION D'UNE RESSOURCE INFORMATIQUE**
VERFAHREN ZUR STEUERUNG DER ZUORDNUNGSANFRAGEN EINER IT-RESSOURCE
METHOD FOR MANAGING ALLOCATION REQUESTS FOR A COMPUTING RESOURCE

(30) Priorité: 20.12.2019 FR 1915201
(43) Date de publication de la demande: 23.06.2021
(73) Titulaire: Orange, 92130 Issy-les-Moulineaux (FR)
(72) Inventeur: DIQUELOU, Arnaud, 92326 CHATILLON CEDEX (FR); ROHON, Mathieu, 92326 CHATILLON CEDEX (FR); GALLARD, Jerome, 92326 CHATILLON CEDEX (FR)

(56) Documents cités:
- HASAN ZIAFAT ET AL: "A hierarchical structure for optimal resource allocation in geographically distributed clouds", FUTURE GENERATION COMPUTER SYSTEMS, vol. 90, 23 August 2018 (2018-08-23), pages 539 - 568, XP055688649, DOI: 10.1016/j.future.2018.08.027
- REKHA P M ET AL: "Cost based data center selection policy for large scale networks", 2014 INTERNATIONAL CONFERENCE ON COMPUTATION OF POWER, ENERGY, INFORMATION AND COMMUNICATION (ICCPEIC), IEEE, 16 April 2014 (2014-04-16), pages 18 - 23, XP032654511, DOI: 10.1109/ICCPEIC.2014.6915333
- VALARMATHI R ET AL: "Differed service broker scheduling for data centres in cloud environment", COMPUTER COMMUNICATIONS, ELSEVIER SCIENCE PUBLISHERS BV, AMSTERDAM, NL, vol. 146, 12 August 2019 (2019-08-12), pages 186 - 191, XP085798254, DOI: 10.1016/J.COMCOM.2019.08.007

## Description

La présente invention concerne un procédé de gestion de requêtes d'allocation, dans un système informatique en nuage, d'une ressource informatique provenant d'un terminal d'un utilisateur.

Elle concerne en outre un dispositif de gestion de requêtes d'allocation.

Un système informatique « en nuage », connu sous le terme de système de « cloud computing », comporte un ensemble de dispositifs informatiques distants reliés entre eux par un réseau de communication, tel qu'Internet, fournissant à des utilisateurs un accès à la demande, à des ressources informatiques, telles qu'un espace de stockage, des logiciels, de la puissance de calcul etc.

De manière générale, les systèmes informatiques en nuage sont organisés, selon un modèle centralisé, en centres informatiques ou centres de traitement de données (connus comme « data centers » en terminologie anglo-saxonne), chaque centre de traitement de données hébergeant des équipements ou dispositifs informatiques permettant de fournir des services aux utilisateurs.

Les centres informatiques sont gérés par de fournisseurs de services en nuage (« Cloud Service Provider » CSP en terminologie anglo-saxonne).

Les fournisseurs de services en nuage proposent principalement trois catégories de services, l'infrastructure en tant que service, connu comme laaS (Infrastructure as a Service), la plateforme en tant que service, connu comme PaaS (Platform as a Service) et le logiciel en tant que Service SaaS (pour Software as a Service). L'infrastructure en tant que service ou laaS offre un accès à des ressources informatiques virtualisées, telles que les machines virtuelles installées sur des serveurs dans des centres informatiques. La plateforme en tant que service ou PaaS offre notamment des ressources virtuelles telles que des machines virtuelles avec un système d'exploitation installé, et le logiciel en tant que service ou SaaS permet aux utilisateurs d'utiliser des logiciels installés dans des serveurs des centres informatiques.

L'infrastructure en tant que service (laaS) est notamment destinée à des entreprises souhaitant sous-traiter des services auprès d'un fournisseur de services en nuage au lieu d'acheter des infrastructures informatiques. L'utilisation des services proposés par les fournisseurs de services en nuage permet à une entreprise de, par exemple, adapter les ressources informatiques nécessaires en fonction des pics d'activité de l'entreprise.

Les fournisseurs de services en nuage peuvent posséder plusieurs centres informatiques, repartis dans des différentes zones géographiques parfois éloignées entre elles, les centres informatiques étant accessibles via un réseau de communication, tel qu'Internet.

En général, lorsqu'un dispositif client souscrit à une offre de services d'un fournisseur de services, l'un des centres informatiques du fournisseur de services gère le compte client ainsi que les accès aux services du dispositif client. En outre, dans des systèmes en nuage classiques, les services demandés par ce dispositif client sont fournis par ce centre informatique. Il est néanmoins possible que le client sélectionne un autre centre informatique pour héberger un service.

Le dispositif client (ou utilisateur de services), tel qu'une entreprise cliente du fournisseur de services en nuage, accède aux services en se connectant au réseau de communication via un réseau d'accès. Ce réseau d'accès est par exemple un réseau de téléphonie mobile ou fixe d'un opérateur ou un réseau privé d'une entreprise, par exemple de type LAN (local Area Network).

Très souvent le dispositif client et le centre informatique fournissant le service sont éloignés l'un de l'autre. Compte tenu de cette distance entre l'emplacement où se trouve l'utilisateur demandant le service et celui où se trouve le centre informatique offrant le service, la qualité de service peut ne pas être satisfaisante, notamment pour des ressources informatiques exigeant des bandes passantes importantes, rendant parfois l'accès aux services difficile ou voire inexistant lorsque les latences sont élevées et/ou la bande passante disponible est faible.

Dans ce contexte, il existe un besoin d'améliorer la qualité des services rendus par les fournisseurs de services en nuage.

Une solution existante pour diminuer les latences lors de l'utilisation des services, est d'augmenter le nombre de centres informatiques du système informatique en nuage afin de distribuer les ressources informatiques de manière que l'utilisateur ait des centres informatiques proches. Ce type de systèmes informatiques en nuage sont connus comme systèmes informatiques en nuage distribués et permettent de diminuer l'éloignement entre l'utilisateur et le centre informatique fournissant des services.

En particulier, dans ce type de solution, le fournisseur de services en nuage ajoute des centres informatiques, de manière à diminuer la distance entre au moins l'un des centres informatiques additionnels et l'utilisateur.

Bien entendu, la distance doit être comprise comme « distance réseau », c'est-à-dire qu'elle est équivalente au temps nécessaire pour acheminer des données entre deux points. Ainsi, si la distance entre le dispositif client et un premier centre informatique est inférieure à la distance entre le dispositif client et un deuxième centre informatique, les données sont acheminées plus rapidement vers le premier centre informatique que vers le deuxième centre informatique.

Par exemple, un dispositif client peut être situé dans une première zone géographique (telle qu'un pays) et sous-traiter des services à un fournisseur de services ayant un centre informatique situé dans une seconde zone géographique. Selon la solution de décentralisation présentée ci-dessus, le fournisseur de services peut ajouter des centres informatiques dans la première zone géographique où se trouve le dispositif client, de sorte que la distance entre le dispositif client et au moins un de ces centres informatiques dans la première zone géographique soit inférieure à la distance entre le dispositif client et le centre informatique situé dans la seconde zone géographique.

Dans ce type de systèmes informatiques en nuage, lorsque le dispositif client ou terminal de l'utilisateur demande l'allocation d'une ressource informatique, un dispositif de gestion détermine le centre informatique qui va fournir le service demandé, par exemple qui va allouer la ressource demandée. Ce dispositif de gestion sélectionne, en fonction de différents critères, le centre informatique parmi l'ensemble de centres informatiques du système informatique en nuage, le plus adéquat pour fournir le service demandé. Le dispositif de gestion peut être un serveur de gestion, un dispositif dans un serveur de gestion ou dans un centre informatique. Cette décision peut être prise différemment selon les systèmes informatiques en nuage. Dans certains systèmes, le dispositif de gestion prend connaissance de l'état des ressources disponibles dans chaque centre informatique et sur cette base sélectionne le centre informatique le plus approprié en fonction des exigences de la demande du client. Dans d'autres systèmes, le dispositif de gestion n'adresse pas des demandes d'allocation aux différents centres informatiques mais sélectionne par lui-même, en fonction des paramètres prédéfinis, le centre informatique le plus adéquat pour la fourniture du service demandé.

Néanmoins, la gestion centralisée des requêtes d'allocation de ressources par un dispositif de gestion peut être complexe, surtout lorsque le nombre de centres informatiques dans le système informatique en nuage est important. En outre, la sélection d'un centre informatique pour l'allocation de ressources (ou fourniture de services) étant centralisée retarde les opérations d'allocation de la ressource informatique demandé. Le document "A hierarchical structure for optimal resource allocation in geographically distributed clouds" (HASAN ZIAFAT ET AL., FUTURE GENERATION COMPUTER SYSTEMS, vol. 90, 2018-08-23, pages 539-568, DOI: 10.1016/j.future.2018.08.027) divulgue une structure hiérarchique pour l'allocation de ressources dans un système informatique en nuage géographiquement distribué. Dans le procédé divulgué par cette document, ce sont des serveurs intermédiaires (« brokers ») qui implémentent le procédé et orientent ou répondent aux requêtes d'allocations de ressources. Ces serveurs intermédiaires sont organisés dans une structure hiérarchique comprenant des intermédiaires géographiques (« geographical brokers »), des intermédiaires de milieu (« middle brokers ») et des intermédiaires attachés aux centres informatiques (« cloud brokers »). L'utilisateur adresse sa requête initiale à un intermédiaire géographique et le routage se fait entre entités du système informatique en nuage.

Le document "Cost based data center selection policy for large scale networks" (REKHA P M ET AL., 2014 INTERNATIONAL CONFERENCE ON COMPUTATION OF POWER, ENERGY, INFORMATION AND COMMUNICATION (ICCPEIC), IEEE, 2014-04-16, pages 18-23, DOI: 10.1109/ICCPEIC.2014.6915333) enseigne une politique de sélection de centres informatiques à grande échelle fondée sur les coûts. Cette politique de sélection est mise en œuvre par des intermédiaires de service (« service brokers »). Les intermédiaires de service vont transmettre des requêtes de ressource suivant des politiques qui peuvent s'appuyer sur la proximité, ou bien sur une notion de coût, ou bien sur une reconfiguration dynamique des politiques de retransmissions.

L'invention propose d'améliorer cette situation.

La portée de l'invention est définie par les revendications indépendantes annexées. D'autres modes de réalisation sont définies dans leurs revendications dépendantes respectives.

A cet effet, l'invention vise, selon un premier aspect, un procédé de gestion d'une requête d'allocation d'une ressource informatique dans un système informatique en nuage , ladite requête étant émise par un terminal d'un utilisateur, ledit système en nuage comportant au moins deux centres informatiques reliés entre eux par un réseau de communication, ledit procédé de gestion étant mis en œuvre par un dispositif d'accès permettant l'accès du terminal de l'utilisateur audit réseau de communication via un réseau d'accès et étant configuré pour déterminer un chemin de routage de la requête vers une adresse de service prédéfinie pour le système informatique en nuage.

Selon l'invention, le procédé de gestion comporte :
- la transmission de la requête d'allocation, reçue en provenance du terminal de l'utilisateur, vers un premier centre informatique; et
- si, selon une réponse indicative de la disponibilité de la ressource informatique, la ressource informatique n'est pas disponible dans le premier centre informatique, la retransmission de la requête d'allocation à un centre informatique adjacent, ce centre informatique adjacent étant le centre informatique suivant dans le chemin de routage,
la retransmission de la requête d'allocation à un centre informatique adjacent étant réitérée jusqu'à ce que soit un centre informatique réponde que la ressource est disponible ou soit la requête a été retransmise vers la totalité de centres informatiques du chemin de routage.

Ainsi, la requête est adressée d'abord au premier centre informatique. Si la ressource informatique n'est pas disponible dans ce premier centre informatique, la requête est retransmise au centre informatique adjacent ou centre informatique suivant dans le chemin de routage établi par le dispositif d'accès pour atteindre le service demandé.

Par conséquent, la requête d'allocation de la ressource informatique est adressée progressivement aux centres informatiques du chemin du routage en partant du premier centre informatique.

On notera que les centres informatiques du chemin de routage sont sollicités un par un jusqu'à ce qu'une réponse positive soit obtenue pour l'allocation de la ressource ou que tous les centres informatiques aient été sollicités. Si aucun des centres informatiques ne donne une réponse favorable à l'allocation de la ressource informatique demandé, l'utilisateur en est notifié.

En outre le chemin de routage est établi par le dispositif d'accès pour atteindre une adresse dite de services, cette adresse étant fournie par le fournisseur de services pour le système informatique en nuage.

Comme indiqué ci-dessus, la distance doit être comprise comme « distance réseau », c'est-à-dire que lorsqu'une requête d'allocation d'une ressource est acheminée entre le terminal de l'utilisateur et l'adresse de services, en utilisant le chemin de routage établi par le dispositif d'accès, le centre informatique le plus proche du terminal de l'utilisateur correspond au centre informatique recevant en premier la requête acheminée.

Grâce à ces caractéristiques, la gestion de l'allocation de la ressource informatique est plus efficace dès lors que la détermination centralisée du centre informatique qui va fournir le service dans un système informatique en nuage distribué, est évitée. La détermination du centre informatique qui va fournir le service est ainsi simplifiée et est mise en œuvre plus rapidement et sans charger le réseau.

En outre, en cas de congestion de réseau, l'impact de la congestion du réseau sur la gestion de la requête d'allocation est minimisé.

En résumé, la gestion de la requête d'allocation de la ressource informatique provenant du terminal d'utilisateur est ainsi optimisée. Ceci permet que la ressource informatique soit allouée plus rapidement, et sans pour autant surcharger le réseau de communication. On notera que dans le cas de l'art antérieur d'un système informatique en nuage distribué où un dispositif de gestion interroge les centres informatique sur leur disponibilité de la ressource, non seulement la gestion de la requête d'allocation est plus lente, mais aussi un trafic de données additionnel est généré, ce qui participe à la surcharge du réseau de communication.

Les avantages apportés par le procédé conforme à l'invention sont encore plus importantes lorsque le système en nuage comporte un grand nombre de centre informatiques. En effet, la complexité d'une gestion centralisée de requêtes d'allocation de ressources augmente lorsque le nombre de centre informatiques dans le système informatique en nuage augmente. Ainsi, le procédé proposé par l'invention présente encore plus d'intérêt dans ces systèmes informatiques en nuage comportant un nombre de centres informatiques élevé.

Selon une caractéristique, le premier centre informatique est le premier centre informatique dans le chemin de routage déterminé.

Ainsi, le premier centre informatique est le centre informatique le plus proche du terminal de l'utilisateur.

La requête d'allocation est adressée d'abord au centre informatique le plus proche du terminal de l'utilisateur. Si la ressource informatique n'est pas disponible dans ce premier centre informatique ou centre informatique le plus proche de l'utilisateur, la requête est retransmisse au centre informatique adjacent ou centre informatique suivant dans le chemin de routage établie par le dispositif d'accès pour atteindre le service demandé.

Par conséquent, la requête d'allocation de la ressource informatique est adressée progressivement aux centres informatiques du chemin du routage en partant du centre informatique le plus proche de l'utilisateur.

On notera que les centres informatiques du chemin de routage sont sollicités un par un jusqu'à ce qu'une réponse positive soit obtenue pour l'allocation de la ressource ou que le centre informatique le plus éloigné du terminal de l'utilisateur ait été sollicité (ou autrement dit que tous les centres informatiques aient été sollicités). Si aucun des centres informatiques ne donne une réponse favorable à l'allocation de la ressource informatique demandé, l'utilisateur en est notifié.

On notera en outre, que dans ce mode de réalisation, le centre informatique recevant en premier la requête acheminée correspond au centre informatique le plus proche du terminal de l'utilisateur. Ainsi, la ressource étant allouée au plus proche du terminal de l'utilisateur, la qualité de service est optimale.

Selon une caractéristique, si la ressource informatique n'est pas disponible dans un centre informatique, le procédé de gestion comporte en outre la réception de la réponse indicative de la disponibilité de la ressource informatique.

Cette réponse provient du centre informatique auquel la requête d'allocation a été transmise. Ainsi, dans un premier temps, le dispositif d'accès reçoit la réponse du premier centre informatique du chemin de routage.

Ainsi, si la ressource informatique n'est pas disponible dans le premier centre informatique, le premier centre informatique répond au dispositif d'accès pour lui en informer. Dans le cas contraire, c'est-à-dire si la ressource informatique est disponible, le processus d'allocation de ressources se termine et le premier centre informatique met la ressource informatique à disposition du client.

Il en ait de même pour les centres informatiques suivants dans le chemin de routage. Ainsi, si le centre informatique auquel le dispositif d'accès adresse la requête n'a pas la disponibilité, il répond au dispositif d'accès pour lui en informer.

Selon un mode de réalisation, lorsque la réponse indique que la ressource n'est pas disponible, la réponse indicative de la disponibilité de la ressource informatique comporte la requête d'allocation transmise.

Lorsque la ressource ne peut pas être allouée par un centre informatique et que le centre informatique adresse une réponse négative au dispositif d'accès, le dispositif d'accès recevant la requête d'allocation qu'il avait transmis précédemment, comprend que la requête d'allocation n'a pas pu être acceptée par le centre informatique auquel il avait adressé la requête, et la retransmet à centre informatique adjacent.

Selon un autre mode de réalisation, la réponse indicative de la disponibilité de la ressource informatique comporte un message indiquant que la ressource informatique demandée n'est pas disponible.

Selon une caractéristique, lorsque la requête a été retransmise vers la totalité de centres informatiques du chemin de routage et que la réponse reçue en provenance de la totalité de centres informatiques indique que la ressource informatique n'est pas disponible, le procédé comporte l'émission d'un message d'échec destiné au terminal d'utilisateur.

L'invention vise, selon un deuxième aspect, un dispositif de gestion d'une requête d'allocation d'une ressource informatique dans un système informatique en nuage, comportant au moins deux centres informatiques reliés entre eux par un réseau de communication, la requête d'allocation étant émise par un terminal d'un utilisateur vers le réseau de communication via un dispositif d'accès permettant l'accès du terminal de l'utilisateur audit réseau de communication via un réseau d'accès et étant configuré pour déterminer un chemin de routage de la requête vers une adresse de service prédéfinie pour le système informatique en nuage.

Selon l'invention, le dispositif de gestion comporte un module de transmission configuré pour :
- transmettre la requête d'allocation, reçue en provenance du terminal de l'utilisateur, vers un premier centre informatique; et;
- retransmettre la requête d'allocation au centre informatique adjacent, ce centre informatique adjacent étant le centre informatique suivant dans le chemin de routage, si selon une réponse indicative de la disponibilité de la ressource informatique, la ressource informatique n'est pas disponible dans le premier centre informatique, et
- réitérer la transmission de la requête d'allocation à un centre informatique adjacent jusqu'à ce que soit un centre informatique réponde que la ressource est disponible ou soit la requête a été retransmise vers la totalité de centres informatiques du chemin de routage.

L'invention vise, selon un troisième aspect un dispositif d'accès permettant l'accès d'un terminal d'un utilisateur à un réseau de communication comportant un dispositif de gestion conforme à l'invention.

On notera que le dispositif d'accès au réseau de communication, via lequel le terminal de l'utilisateur accède au système informatique en nuage, met en œuvre le système de gestion d'une requête d'allocation d'une ressource informatique. Autrement dit, la détermination du centre informatique qui va allouer la ressource informatique est mise en œuvre par l'infrastructure du réseau d'accès au réseau de communication reliant les centres informatiques du système informatique en nuage, c'est-à-dire indépendamment du système informatique en nuage.

L'invention vise, selon un quatrième aspect, un programme d'ordinateur comprenant une séquence d'instructions pour la mise en œuvre du procédé de gestion conforme à l'invention, lorsqu'il est chargé et exécuté par un processeur.

Finalement, l'invention vise, selon un cinquième aspect, un support d'informations lisible par un ordinateur, sur lequel est enregistré un programme d'ordinateur comprenant une séquence d'instructions pour la mise en œuvre du procédé de gestion conforme à l'invention, lorsqu'il est chargé dans et exécuté par un processeur.

Le dispositif de gestion, le dispositif d'accès, le programme d'ordinateur et le support d'informations présentent des caractéristiques et avantages analogues à ceux décrits précédemment en relation avec le procédé de gestion d'une requête d'allocation.

D'autres particularités et avantages de l'invention apparaîtront encore dans la description ci-après.

Aux dessins annexés, donnés à titre d'exemples non limitatifs :
[Fig 1] la figure 1 représente un système informatique en nuage pouvant mettre en œuvre les procédés selon l'invention,
[Fig 2] la figure 2 illustre des étapes d'un procédé de gestion d'une requête d'allocation conforme à un mode de réalisation de l'invention,
[Fig 3] la figure 3 illustre une architecture matérielle pouvant mettre en œuvre le procédé de gestion conforme à l'invention, et
[Fig 4] la figure 4 illustre des échanges entre des entités du système selon un exemple de mise en œuvre du procédé de gestion d'une requête d'allocation.

L'invention trouve son application dans des systèmes informatiques en nuage, connus sous le terme de système de « cloud computing ». Elle s'applique particulièrement dans le cadre de demandes d'utilisation, par exemple à la demande, d'infrastructures offertes par un fournisseur de services en nuage. Ce service est connu comme « *'infrastructure en tant que service* » (IaaS, pour « Infrastructure as a Service).

Néanmoins, l'invention s'applique aussi pour la demande d'autres types de services, tel que « *la plateforme en tant que service* » (PaaS, pour « Platform as a Service ») ou « *le logiciel en tant que Service* » (SaaS, pour « Software as a Service »).

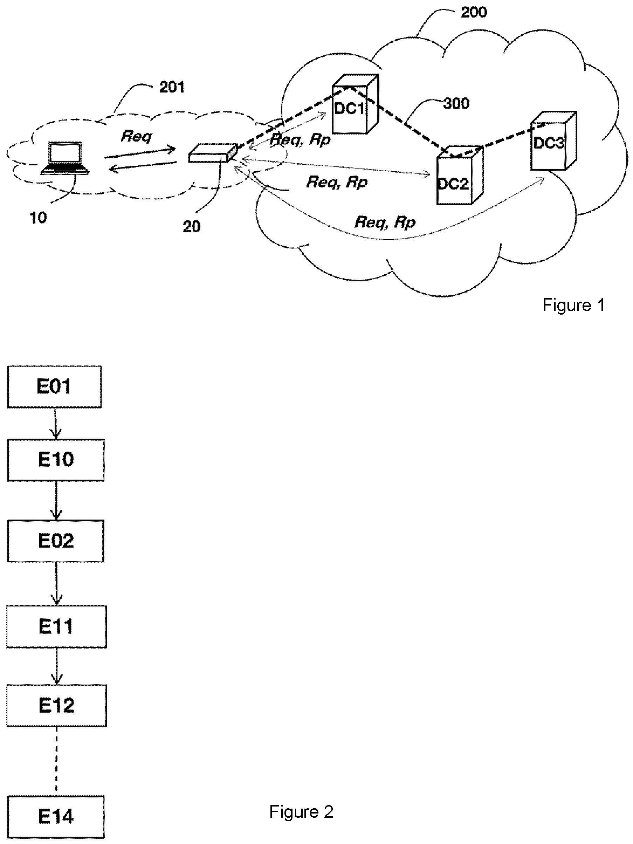

La **figure 1** représente un système informatique en nuage 1 pouvant mettre en œuvre le procédé de gestion conforme à l'invention. Le système informatique en nuage 1 représenté comporte plusieurs centres informatiques DC, connus comme « data centers ». Dans l'exemple représenté, le système informatique en nuage 1 comporte trois centres informatiques DC1, DC2, DC3. Ces centres informatiques DC1, DC2, DC3 sont reliés entre eux par un réseau de communication 200 ou appartiennent à des réseaux de communication différents reliées entre eux. Autrement dit, les centres informatiques DC1, DC2, DC3 communiquent entre eux via un ou plusieurs réseaux de communication.

Un terminal d'un utilisateur 10 utilise les services fournis par un système informatique en nuage 1. Pour l'utilisation de ces services, le terminal d'utilisateur 10 doit générer, et émettre vers le système informatique en nuage 1, des requêtes demandant la fourniture des services. Une requête demandant la fourniture d'un service est une requête d'allocation d'une ressource informatique. Par requête d'allocation d'une ressource informatique on entend une requête par laquelle le terminal de l'utilisateur 10 demande qu'une ressource informatique lui soit allouée dans le système informatique en nuage 1.

Lorsqu'un utilisateur souscrit aux services d'un fournisseur de services, ce dernier fournit à l'utilisateur avec les données de configuration nécessaires pour que le terminal de l'utilisateur puisse accéder aux services mis à disposition par le fournisseur de services. Notamment, le terminal d'utilisateur 10 est configuré pour adresser les requêtes demandant un service ou demande d'allocation d'une ressource informatique dans le système informatique en nuage, à une adresse dite de service. Ainsi, le terminal adresse les requêtes d'allocation d'une ressource informatique à cette adresse de service.

Un parmi les centres informatiques DC1, DC2, DC3 peut se charger de la gestion du compte client de l'utilisateur. Parfois, le compte client de l'utilisateur est géré par une infrastructure indépendante des centres informatiques.

Le terminal de l'utilisateur 10 accède au réseau de communication 200 via un dispositif d'accès 20. Le dispositif d'accès 20 permet l'accès du terminal de l'utilisateur 10 au réseau de communication 200 par l'intermédiaire d'un réseau d'accès 201. De manière connue, ce dispositif d'accès 20 est configuré pour mettre en œuvre le routage des données envoyées par le terminal d'utilisateur 10 vers le réseau de communication 200, en particulier vers des adresses d'infrastructures dans le réseau de communication.

Lorsque le terminal d'utilisateur 10 émet une requête d'allocation d'une ressource informatique, le dispositif d'accès 20, selon des méthodes classiques et connues de l'homme du métier, établi le plan ou chemin de routage 300 entre le terminal d'utilisateur 10 et l'adresse de service prédéfinie par le fournisseur de services. Le chemin de routage 300 contient les adresses des centres informatiques DC1, DC2, DC3 du système informatique en nuage 1 utilisés pour le routage de la requête vers l'adresse de service.

Selon le chemin de routage 300 établi par le dispositif d'accès 20, la requête d'allocation émise par le terminal de l'utilisateur est transmise vers un premier centre informatique DC1, ensuite vers un deuxième DC2 et finalement vers un troisième DC3. Dans le mode de réalisation illustré, l'adresse de service correspond à l'adresse du troisième et dernier centre informatique DC3.

Bien entendu, cet exemple est purement illustratif, le nombre de centres informatiques pouvant être différent.

On notera que, comme il est connu de l'homme du métier, le chemin de routage qui a été configuré au niveau du dispositif d'accès 20 est le chemin optimal pour acheminer la requête vers l'adresse de service. Ainsi, le premier centre informatique auquel la requête est destinée est le centre informatique qui se trouve le plus proche du terminal de l'utilisateur. Dans d'autres termes, les centres informatiques du chemin de routage 300 sont ordonnés du plus proche du terminal de l'utilisateur 10 au plus éloigné.

Le terminal de l'utilisateur 10 peut être tout type de dispositif configuré pour accéder à un réseau de communication tel qu'Internet via le dispositif d'accès 20. Le terminal de l'utilisateur 10 est typiquement un ordinateur, portable ou de bureau ou une station de travail. Néanmoins, il peut être un téléphone portable de type « smart phone » ou autre terminal de communication mobile, tel qu'une tablette.

Le dispositif d'accès 20 est typiquement une passerelle domestique ou résidentielle ou un routeur permettant l'accès du terminal de l'utilisateur 10 au réseau de communication 200, tel qu'Internet. Le réseau d'accès 201 peut être un réseau de téléphonie mobile, un réseau de téléphonie fixe offrant un accès à l'Internet de type ADSL (pour « Asymmetric Digital Subscriber Line »), ou un réseau privé de type LAN (pour « Local Area Network ») ou WLAN (pour « Wireless Local Area Network »).

La **figure 2** illustre des étapes d'un procédé de gestion d'une requête d'allocation conforme à un mode de réalisation de l'invention.

Le procédé de gestion d'un requête d'allocation est mise en œuvre par le dispositif d'accès 20. On notera que l'allocation de la ressource informatique est mise en œuvre par un centre informatique DC1, DC2, DC3.

Lorsque le dispositif accès 20 reçoit E01 une requête d'allocation *Req* d'une ressource informatique provenant du terminal de l'utilisateur 10, il transmet E10 la requête d'allocation *Req* à un premier centre informatique DC1. Le premier centre informatique DC1 est le premier centre informatique dans le chemin de routage 300 établi par le dispositif d'accès 20. Dans un mode de réalisation, le premier centre informatique DC1 est le centre informatique le plus proche du terminal de l'utilisateur 10.

Lorsque le premier centre informatique DC1 reçoit la requête d'allocation de la ressource informatique en provenance du dispositif d'accès 20, il met en œuvre la vérification de la disponibilité de la ressource informatique. Ce type de vérification est connue de l'homme du métier et ne nécessite pas d'être décrite ici.

En fonction du résultat de la vérification, le premier centre informatique DC1 met en œuvre l'allocation de la ressource informatique et/ou l'envoi d'une réponse indicative de la disponibilité de ladite ressource au dispositif d'accès 20.En particulier, lorsque, selon le résultat de la vérification, la ressource informatique est disponible dans le premier centre informatique DC1, l'allocation de la ressource informatique est mise en œuvre.

Lorsque, selon le résultat de ladite vérification, la ressource informatique n'est pas disponible, le centre informatique envoi au dispositif d'accès 20 une réponse lui indiquant que la ressource informatique n'est pas disponible. Dans un mode de réalisation cette réponse comporte la requête d'allocation transmise par le dispositif d'accès 20 préalablement.

Si le dispositif d'accès 20 reçoit E02 une réponse provenant du premier centre informatique indiquant que la ressource informatique n'est pas disponible dans le premier centre informatique DC1, il retransmet E11 la requête d'allocation au suivant centre informatique dans le chemin de routage 300. Dans le mode de réalisation représenté, le centre informatique suivant est le deuxième centre informatique DC2, c'est-à-dire le suivant centre informatique recevant la requête suivant le chemin de routage 300 établie par le dispositif d'accès 20 pour atteindre l'adresse de services.

Le deuxième centre informatique DC2 met en œuvre les mêmes opérations que le premier centre informatique, c'est-à-dire il vérifie si la ressource informatique demandée par l'utilisateur est disponible, auquel cas il met en œuvre l'allocation de la ressource. Si la ressource informatique n'y est pas disponible, il informe le dispositif d'accès et celui-ci retransmet la requête vers le centre informatique suivant, c'est-à-dire le troisième centre informatique DC3. Le troisième centre informatique met en œuvre les mêmes opérations que le premier et le deuxième centre informatique de manière que soit la ressource informatique est allouée par le troisième centre informatique DC3 soit la requête d'allocation est retransmise par le dispositif d'accès au centre informatique suivant et ainsi de suite jusqu'à ce qu'un centre informatique ait la disponibilité pour allouer la ressource informatique demandée par le terminal d'utilisateur, ou que tous les centres informatiques dans le chemin de routage aient été sollicités à fin de vérifier s'il peut allouer la ressource informatique demandée.

On notera que lorsque tous les centres informatiques dans le chemin de routage ont été sollicités, le dernier centre informatique DC3 dans le chemin de routage 300 ou centre informatique le plus éloigné du terminal de l'utilisateur, a été sollicité

Ainsi, le procédé de gestion met en œuvre la retransmission de la requête d'allocation au suivant centre informatique DC1, DC2, DC3 dans ledit chemin de routage 300, jusqu'à ce que soit la ressource informatique est disponible dans un centre informatique DC1, DC2, DC3 ou soit la requête a été retransmise E11, E12, E13 vers le centre informatique DC3 le plus éloigné du terminal d'utilisateur, ou vers la totalité de centres informatiques DC1, DC2, DC3.

Dans un autre mode de réalisation non représenté, si selon la réponse indicative de la disponibilité, la ressource informatique n'est pas disponible dans un centre informatique, la requête d'allocation est en outre retransmisse par le centre informatique au centre informatique adjacent.

Dans ce mode de réalisation, la requête d'allocation est transmise au centre informatique suivant par le dispositif d'accès ainsi que par le centre informatique additionnel. Ceci représente des moyens redondants pour mettre en œuvre la transmission de la requête d'allocation.

Si la ressource informatique n'est pas disponible dans aucun des centres informatiques additionnels DC1, DC2, DC3, le dispositif d'accès 20 adresse un message d'erreur au terminal d'utilisateur 10. Ce message contient une information représentative de l'échec de la requête d'allocation de la ressource informatique.

Les messages échangés entre le dispositif d'accès et les centres informatiques ainsi qu'entre le dispositif d'accès et le terminal de communication sont conformes aux protocoles de communication tels que ceux utilisés par le réseau Internet.

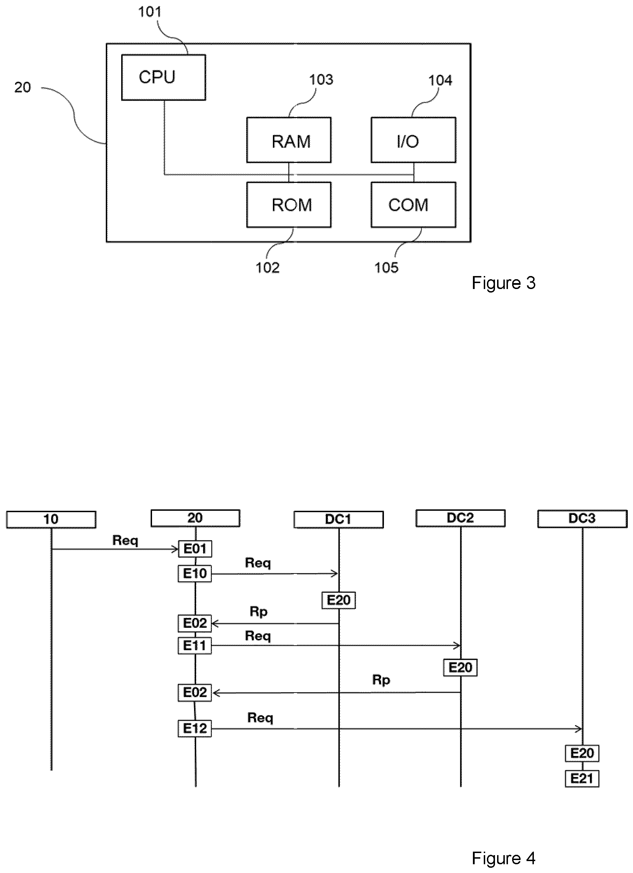

La **figure 3** illustre schématiquement une architecture matérielle d'un dispositif de gestion pouvant mettre en œuvre le procédé de gestion conforme à l'invention.

Dans un mode de réalisation, le dispositif de gestion est embarqué ou intégré dans le dispositif d'accès 20.

Le dispositif de gestion 20 comprend un bus de communication 100 auquel sont reliées :
- une unité de traitement 101, nommée sur la figure CPU (pour « Central Processing Unit ») et pouvant comporter un ou plusieurs processeurs ;
- une mémoire non volatile 102, par exemple ROM (pour « Read Only Memory »), EEPROM (pour « Electrically Erasable Read Only Memory ») ou une mémoire Flash;
- une mémoire vive 103 ou RAM (pour « Random Access Memory ») ;
- une interface 104 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec dispositif d'accès 20 via une interface graphique ou interface homme-machine ; et
- une interface de communication 105, nommée COM sur la figure, adaptée à échanger des données par exemple avec un centre informatique DC1, DC2, DC3 via un réseau de communication 200.

La mémoire vive 103 comprend des registres adaptés à l'enregistrement des variables et paramètres créés et modifiés au cours de l'exécution d'un programme informatique comprenant des instructions pour la mise en œuvre du procédé de gestion selon l'invention. Les codes d'instructions du programme stocké en mémoire non-volatile 102 sont chargés en mémoire RAM 103 en vue d'être exécutés par l'unité de traitement CPU 101.

La mémoire non-volatile 102 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre du procédé de gestion selon l'invention. La mémoire réinscriptible peut comprendre le chemin de routage 300 de la requête d'allocation vers l'adresse de services ou des paramètres renseignant l'adresse de service.

Ce programme définit, par le biais de ses instructions, des modules fonctionnels du dispositif de gestion qui sont mise en œuvre et/ou commandent les éléments matériels décrits précédemment. Ces modules comprennent notamment un module de transmission configuré pour :
- transmettre (E10) la requête d'allocation *(Req),* reçue en provenance du terminal de l'utilisateur (10), vers un premier centre informatique (DC1), le premier centre informatique (DC1) étant le premier dans le chemin de routage (300) déterminé; et;
- retransmettre (E11) la requête d'allocation *(Req)* au centre informatique adjacent (DC2), ce centre informatique adjacent étant le centre informatique suivant dans le chemin de routage (300), si selon une réponse (*Rp*) indicative de la disponibilité de la ressource informatique, la ressource informatique n'est pas disponible dans le premier centre informatique (DC1), et
- réitérer la transmission (E12) de la requête d'allocation à un centre informatique adjacent (DC3) jusqu'à ce que soit un centre informatique réponde que la ressource est disponible ou soit que la requête *(Req)* a été retransmise vers la totalité de centres informatiques (DC1, DC2, DC3) du chemin de routage (300).

Les modules et moyens précités sont pilotés par le processeur de l'unité de traitement 101. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gate Array »).

Chaque centre informatique DC1, DC2, DC3 a une architecture matérielle similaire à celle décrite pour le dispositif de gestion et ne sera pas décrite.

En particulier, chaque centre informatique comporte :
- un module de vérification configuré pour vérifier, à réception de ladite requête d'allocation, la disponibilité de la ressource informatique,
- un module d'allocation configurer pour allouer ladite ressource informatique, lorsque ladite ressource informatique est disponible, et
- un module de réponse configuré pour envoyer une réponse indicative de la disponibilité de ladite ressource au dispositif d'accès.

Le terminal de l'utilisateur 10 comprend également un bus de communication auquel sont reliées une unité de traitement ou microprocesseur, une mémoire non volatile, une mémoire vive ou RAM, et une interface de communication adaptée notamment à échanger des données avec le dispositif d'accès 20.

La **figure 4** illustre un exemple d'échanges entre le terminal de l'utilisateur 10, le dispositif d'accès 20 et des centres informatiques DC1, DC2, DC3.

Dans l'exemple représenté, le troisième centre informatique DC3 a la disponibilité pour allouer la ressource informatique demandée par l'utilisateur.

Bien entendu, cet exemple est donné à titre purement illustratif, les échanges étant différents dans des exemples différents.

Dans cet exemple, le terminal d'utilisateur 10 émet une requête d'allocation *Req* d'une ressource, cette requête *Req* étant reçue E01 par le dispositif d'accès 20. Le dispositif d'accès 20 l'adresse E10 au premier centre informatique DC1. Celui-ci reçoit la requête *Req* et vérifie la disponibilité de la ressource informatique. La ressource informatique n'étant pas disponible, le centre informatique DC1 répond au dispositif d'accès 20. Ce dernier 20 reçoit E03 la réponse et retransmet E11 la requête *Req* au deuxième centre informatique DC2.

Le deuxième centre informatique DC2 reçoit la requête *Req* et vérifie la disponibilité de la ressource informatique E20. La ressource informatique n'étant pas disponible, le centre informatique DC2 répond au dispositif d'accès 20. Ce dernier 20 reçoit E03 la réponse et retransmet E11 la requête *Req* au troisième centre informatique DC3.

Le troisième centre informatique DC3 reçoit la requête *Req* et vérifie la disponibilité de la ressource informatique E20. La ressource informatique étant disponible, le troisième centre informatique DC3 met en œuvre l'allocation E21 de la ressource informatique.

L'utilisateur peut ainsi utiliser la ressource informatique demandée qui est allouée dans un centre informatique sélectionné par le dispositif d'accès 20 de son fournisseur d'accès au réseau de communication 200, tel qu'Internet.

## Revendications

1. Procédé de gestion d'une requête d'allocation d'une ressource informatique dans un système informatique en nuage (1), ladite requête étant émise par un terminal d'un utilisateur (10), le système informatique en nuage comportant au moins deux centres informatiques (DC1, DC2, DC3) reliés entre eux par un réseau de communication (200), ledit terminal de l'utilisateur (10) accédant audit réseau de communication (200) via un dispositif d'accès (20) par l'intermédiaire d'un réseau d'accès (201), ledit procédé de gestion étant mis en œuvre par le dispositif d'accès (20), ledit dispositif d'accès (20) étant configuré pour déterminer un chemin de routage (300) de la requête vers une adresse de service prédéfinie pour le système informatique en nuage (1), adresse fournie par le fournisseur de services et en ce qu'il comporte :
- la transmission (E10) de ladite requête d'allocation (*Req*), reçue en provenance du terminal de l'utilisateur (10), vers un premier centre informatique (DC1), ledit premier centre informatique (DC1) étant le premier dans le chemin de routage (300) déterminé ; et,
- si, selon une réponse (*Rp*) indicative de la disponibilité de la ressource informatique, la ressource informatique n'est pas disponible dans le premier centre informatique (DC1), la retransmission (E11) de ladite requête d'allocation (*Req*) à un centre informatique adjacent, ce centre informatique adjacent (DC2) étant le centre informatique suivant dans le chemin de routage (300),
la retransmission (E12) de la requête d'allocation (*Req*) à un centre informatique adjacent (DC3) étant réitérée jusqu'à ce que soit un centre informatique (DC1, DC2, DC3) réponde que la ressource informatique est disponible ou soit la requête (*Req*) a été retransmise vers la totalité de centres informatiques (DC1, DC2, DC3) du chemin de routage (300), l'adresse de service étant celle du dernier centre informatique (DC3) dans le chemin de routage (300).

2. Procédé de gestion conforme à la revendication 1, **caractérisé en ce que** si la ressource informatique n'est pas disponible dans un centre informatique, ledit procédé de gestion comporte en outre la réception (E02) de la réponse indicative de la disponibilité de la ressource informatique.

3. Procédé de gestion conforme à la revendication 1, **caractérisé en ce que** lorsque la réponse reçue (E02) indique que la ressource n'est pas disponible, la réponse comporte ladite requête d'allocation (*Req*) transmise (E10) ou retransmise (E11, E12).

4. Procédé de gestion conforme à la revendication 1, **caractérisé en ce que** lorsque la réponse reçue (E02) indique que la ressource n'est pas disponible, la réponse comporte un message indiquant que la ressource informatique demandée n'est pas disponible.

5. Procédé de gestion conforme à la revendication 1, **caractérisé en ce que** lorsque la requête (*Req*) a été retransmise vers la totalité de centres informatiques (DC1, DC2, DC3) du chemin de routage (300) et que la réponse reçue (Rp) en provenance de la totalité de centres informatiques (DC1, DC2, DC3) indique que la ressource informatique n'est pas disponible, le procédé comporte l'émission d'un message d'échec destiné au terminal d'utilisateur (10).

6. Dispositif de gestion d'une requête d'allocation d'une ressource informatique dans un système informatique en nuage (1), le système informatique en nuage comportant au moins deux centres informatiques (DC1, DC2, DC3) reliés entre eux par un réseau de communication (200), la requête d'allocation (*Req*) étant émise par un terminal d'un utilisateur (10) vers le réseau de communication (200) via un dispositif d'accès (20) par l'intermédiaire d'un réseau d'accès (201), en permettant l'accès du terminal de l'utilisateur (10) audit réseau de communication (200), ledit dispositif de gestion faisant partie dudit dispositif d'accès (20), ledit dispositif d'accès (20) étant configuré pour déterminer un chemin de routage (300) de la requête (*Req*) vers une adresse de service prédéfinie pour le système informatique en nuage (1), adresse fournie par le fournisseur de services et en ce qu'il comporte un module de transmission configuré pour :
- transmettre (E10) la requête d'allocation (*Req*), reçue en provenance du terminal de l'utilisateur (10), vers un premier centre informatique (DC1), ledit premier centre informatique (DC1) étant le premier dans le chemin de routage (300) déterminé ; et,
- retransmettre (E11) la requête d'allocation (*Req*) au centre informatique adjacent (DC2), ce centre informatique adjacent étant le centre informatique suivant dans le chemin de routage (300), si selon une réponse (*Rp*) indicative de la disponibilité de la ressource informatique, la ressource informatique n'est pas disponible dans le premier centre informatique (DC1) ; et,
- réitérer la transmission (E12) de la requête d'allocation à un centre informatique adjacent (DC3) jusqu'à ce que soit un centre informatique réponde que la ressource est disponible ou soit que la requête (*Req*) a été retransmise vers la totalité de centres informatiques (DC1, DC2, DC3) du chemin de routage (300), l'adresse de service étant celle du dernier centre informatique (DC3) dans le chemin de routage (300).

7. Programme d'ordinateur comprenant une séquence d'instructions pour la mise en œuvre du procédé de gestion conforme à l'une des revendications 1 à 5 lorsqu'il est chargé et exécuté par un processeur.

8. Support d'informations lisible par un ordinateur, sur lequel est enregistré un programme d'ordinateur comprenant une séquence d'instructions pour la mise en œuvre du procédé de gestion conforme à l'une des revendications 1 à 5 lorsqu'il est chargé dans et exécuté par un processeur.

## Patentansprüche

1. Verfahren zur Verwaltung einer Anforderung zur Zuweisung einer IT-Ressource in einem Cloud-Computing-System (1), wobei die Anforderung von einem Endgerät eines Benutzers (10) gesendet wird, wobei das Cloud-Computing-System mindestens zwei Rechenzentren (DC1, DC2, DC3) umfasst, die durch ein Kommunikationsnetzwerk (200) untereinander verbunden sind, wobei das Endgerät des Benutzers (10) über eine Zugangsvorrichtung (20) über ein Zugangsnetzwerk (201) auf das Kommunikationsnetzwerk (200) zugreift, wobei das Verfahren zur Verwaltung von der Zugangsvorrichtung (20) durchgeführt wird, wobei die Zugangsvorrichtung (20) dazu ausgelegt ist, einen Routing-Pfad (300) für die Anforderung zu einer vordefinierten Dienstadresse für das Cloud-Computing-System (1) zu bestimmen, wobei die Adresse von dem Dienstanbieter bereitgestellt wird, und dadurch, dass es umfasst:
- das Übertragen (E10) der Zuweisungsanforderung (Req), die von dem Endgerät des Benutzers (10) empfangen wird, zu einem ersten Rechenzentrum (DC1), wobei das erste Rechenzentrum (DC1) das erste auf dem bestimmten Routing-Pfad (300) ist; und,
- falls, gemäß einer Antwort (Rp), die die Verfügbarkeit der IT-Ressource angibt, die IT-Ressource in dem ersten Rechenzentrum (DC1) nicht verfügbar ist, das Weiterübertragen (E11) der Zuweisungsanforderung (Req) an ein benachbartes Rechenzentrum, wobei dieses benachbarte Rechenzentrum (DC2) das nächste Rechenzentrum auf dem Routing-Pfad (300) ist,
wobei das Weiterübertragen (E12) der Zuweisungsanforderung (Req) an ein benachbartes Rechenzentrum (DC3) wiederholt wird, bis entweder ein Rechenzentrum (DC1, DC2, DC3) antwortet, dass die IT-Ressource verfügbar ist, oder die Anforderung (Req) an alle Rechenzentren (DC1, DC2, DC3) des Routing-Pfads (300) weiterübertragen worden ist, wobei die Dienstadresse diejenige des letzten Rechenzentrums (DC3) auf dem Routing-Pfad (300) ist.

2. Verfahren zur Verwaltung nach Anspruch 1, **dadurch gekennzeichnet, dass**, falls die IT-Ressource in einem Rechenzentrum nicht verfügbar ist, das Verfahren zur Verwaltung ferner das Empfangen (E02) der Antwort umfasst, die die Verfügbarkeit der IT-Ressource angibt.

3. Verfahren zur Verwaltung nach Anspruch 1, **dadurch gekennzeichnet, dass**, falls die empfangene (E02) Antwort angibt, dass die Ressource nicht verfügbar ist, die Antwort die übertragene (E10) oder weiterübertragene (E11, E12) Zuweisungsanforderung (Req) umfasst.

4. Verfahren zur Verwaltung nach Anspruch 1, **dadurch gekennzeichnet, dass**, falls die empfangene (E02) Antwort angibt, dass die Ressource nicht verfügbar ist, die Antwort eine Meldung umfasst, die angibt, dass die verlangte IT-Ressource nicht verfügbar ist.

5. Verfahren zur Verwaltung nach Anspruch 1, **dadurch gekennzeichnet, dass**, falls die Anforderung (Req) an alle Rechenzentren (DC1, DC2, DC3) des Routing-Pfads (300) weiterübertragen worden ist und die von allen Rechenzentren (DC1, DC2, DC3) empfangene Antwort (Rp) angibt, dass die IT-Ressource nicht verfügbar ist, das Verfahren das Senden einer für das Benutzerendgerät (10) bestimmten Fehlermeldung umfasst.

6. Vorrichtung zur Verwaltung einer Anforderung zur Zuweisung einer IT-Ressource in einem Cloud-Computing-System (1), wobei das Cloud-Computing-System mindestens zwei Rechenzentren (DC1, DC2, DC3) umfasst, die durch ein Kommunikationsnetzwerk (200) untereinander verbunden sind, wobei die Zuweisungsanforderung (Req) von einem Endgerät eines Benutzers (10) über eine Zugangsvorrichtung (20) über ein Zugangsnetzwerk (201) an das Kommunikationsnetzwerk (200) gesendet wird, wobei der Zugriff des Endgeräts des Benutzers (10) auf das Kommunikationsnetzwerk (200) erlaubt wird, wobei die Vorrichtung zur Verwaltung zu der Zugangsvorrichtung (20) gehört, wobei die Zugangsvorrichtung (20) dazu ausgelegt ist, einen Routing-Pfad (300) für die Anforderung (Req) zu einer vordefinierten Dienstadresse für das Cloud-Computing-System (1) zu bestimmen, wobei die Adresse von dem Dienstanbieter bereitgestellt wird, und dadurch, dass es ein Übertragungsmodul umfasst, das dazu ausgelegt ist:
- die Zuweisungsanforderung (Req), die von dem Endgerät des Benutzers (10) empfangen wird, zu einem ersten Rechenzentrum (DC1) zu übertragen (E10), wobei das erste Rechenzentrum (DC1) das erste auf dem bestimmten Routing-Pfad (300) ist; und,
- die der Zuweisungsanforderung (Req) an das benachbarte Rechenzentrum (DC2) weiterzuübertragen (E11), wobei dieses benachbarte Rechenzentrum das nächste Rechenzentrum auf dem Routing-Pfad (300) ist, falls gemäß einer Antwort (Rp), die die Verfügbarkeit der IT-Ressource angibt, die IT-Ressource in dem ersten Rechenzentrum (DC1) nicht verfügbar ist; und,
- das Übertragen (E12) der Zuweisungsanforderung an ein benachbartes Rechenzentrum (DC3) zu wiederholen, bis entweder ein Rechenzentrum antwortet, dass die Ressource verfügbar ist, oder die Anforderung (Req) an alle Rechenzentren (DC1, DC2, DC3) des Routing-Pfads (300) weiterübertragen worden ist, wobei die Dienstadresse diejenige des letzten Rechenzentrums (DC3) auf dem Routing-Pfad (300) ist.

7. Computerprogramm, das eine Folge von Anweisungen umfasst, die, wenn es von einem Computer geladen und ausgeführt wird, das Verfahren zur Verwaltung nach einem der Ansprüche 1 bis 5 durchführen.

8. Computerlesbarer Informationsträger, auf dem ein Computerprogramm gespeichert ist, das eine Folge von Anweisungen umfasst, die, wenn es von einem Computer geladen und ausgeführt wird, das Verfahren zur Verwaltung nach einem der Ansprüche 1 bis 5 durchführen.

## Claims

1. Method for managing an allocation request to allocate a computing resource in a cloud computing system (1), said request being sent by a terminal (10) of a user, the cloud computing system comprising at least two data centres (DC1, DC2, DC3) connected to one another by a communication network (200), said terminal (10) of the user accessing said communication network (200) via an access device (20) by way of an access network (201), said management method being implemented by the access device (20), said access device (20) being configured so as to determine a routing path (300) for routing the request to a predefined service address for the cloud computing system (1), which address is provided by the service provider, **characterized in that** said management method comprises:
- transmitting (E10) said allocation request (Req), received from the terminal (10) of the user, to a first data centre (DC1), said first data centre (DC1) being the first one in the determined routing path (300); and
- if, according to a response (Rp) indicating the availability of the computing resource, the computing resource is not available in the first data centre (DC1), retransmitting (E11) said allocation request (Req) to an adjacent data centre, this adjacent data centre (DC2) being the next data centre in the routing path (300),
the retransmission (E12) of the allocation request (Req) to an adjacent data centre (DC3) being reiterated until either a data centre (DC1, DC2, DC3) responds that the computing resource is available or the request (Req) has been retransmitted to all of the data centres (DC1, DC2, DC3) on the routing path (300), the service address being that of the last data centre (DC3) in the routing path (300).

2. Management method according to Claim 1, **characterized in that**, if the computing resource is not available in a data centre, said management method furthermore comprises receiving (E02) the response indicating the availability of the computing resource.

3. Management method according to Claim 1, **characterized in that**, when the received response (E02) indicates that the resource is not available, the response contains said transmitted (E10) or retransmitted (E11, E12) allocation request (Req).

4. Management method according to Claim 1, **characterized in that**, when the received response (E02) indicates that the resource is not available, the response contains a message indicating that the requested computing resource is not available.

5. Management method according to Claim 1, **characterized in that**, when the request (Req) has been retransmitted to all of the data centres (DC1, DC2, DC3) on the routing path (300) and the response received (Rp) from all of the data centres (DC1, DC2, DC3) indicates that the computing resource is not available, the method comprises sending a failure message to the user terminal (10).

6. Device for managing an allocation request to allocate a computing resource in a cloud computing system (1), the cloud computing system comprising at least two data centres (DC1, DC2, DC3) connected to one another by a communication network (200), the allocation request (Req) being sent by a terminal (10) of a user to the communication network (200) via an access device (20) by way of an access network (201), thereby allowing the terminal (10) of the user to access said communication network (200), said management device forming part of said access device (20), said access device (20) being configured so as to determine a routing path (300) for routing the request (Req) to a predefined service address for the cloud computing system (1), which address is provided by the service provider, **characterized in that** said management device comprises a transmission module configured so as to:
- transmit (E10) the allocation request (Req), received from the terminal (10) of the user, to a first data centre (DC1), said first data centre (DC1) being the first one in the determined routing path (300); and
- retransmit (E11) the allocation request (Req) to the adjacent data centre (DC2), this adjacent data centre being the next data centre in the routing path (300), if, according to a response (Rp) indicating the availability of the computing resource, the computing resource is not available in the first data centre (DC1); and
- reiterate the transmission (E12) of the allocation request to an adjacent data centre (DC3) until either a data centre responds that the resource is available or that the request (Req) has been retransmitted to all of the data centres (DC1, DC2, DC3) on the routing path (300), the service address being that of the last data centre (DC3) in the routing path (300).

7. Computer program comprising a sequence of instructions for implementing the management method according to one of Claims 1 to 5 when it is loaded and executed by a processor.

8. Computer-readable information medium on which there is recorded a computer program comprising a sequence of instructions for implementing the management method according to one of Claims 1 to 5 when it is loaded into and executed by a processor.
